# NEW EUROPEAN PATENT SPECIFICATION

(11) **EP 0 452 125 B2**
(45) Date of publication and mention of the opposition decision: **05.07.2000**
(45) Mention of the grant of the patent: 13.07.1994
(21) Application number: 91303206.6
(22) Date of filing: 11.04.1991
(51) Int. Cl.: F01N 3/02, F01N 3/20, H05B 3/14

(54) **Heater and catalytic converter**
Heizgerät und Katalysatoreinrichtung
Elément chauffant et dispositif de catalyseur

(30) Priority: 12.04.1990 JP 9686690; 30.01.1991 JP 2939391
(43) Date of publication of application: 16.10.1991
(73) Proprietor: NGK INSULATORS, LTD., Nagoya-shi, Aichi-ken 467 (JP)
(72) Inventor: Mizuno, Hiroshige, Tajimi-city, Gifu-prefecture 507 (JP); Abe, Fumio, Handa-city, Aichi-prefecture 475 (JP); Harada, Takashi, Nagoya-city, Aichi-prefecture 465 (JP); Kondo, Tomoharu, Toki-city, Gifu-prefecture 509-51 (JP)
(74) Representative: Stoner, Gerard Patrick

(56) References cited:
- EP-A- 0 152 560
- EP-A- 0 194 507
- EP-B- 0 049 489
- EP-B- 0 121 174
- EP-B- 0 245 737
- WO-A-89/10471
- GB-A- 2 049 377
- SU-A- 1 254 596
- US-A- 3 956 614
- US-A- 3 982 100
- US-A- 3 983 283
- US-A- 4 717 813
- PATENT ABSTRACTS OF JAPAN vol. 8, no. 227 (M-332) 18 October 1984 & JP-A-59 109 704 ( TOSHIBA ) 25 June 1984

## Description

The present invention relates to a resistance heating element and a catalytic converter including the resistance heating element. The element has a honeycomb structure. The invention also relates to a method of making a resistance heater.

Honeycomb heaters of the above-described type can be employed as heaters for domestic use, such as hot air heaters, or as industrial heaters, such as preheaters used for control of automobile exhaust emission. The above-described catalytic converters can be applied for use in automobile exhaust emission control.

Conventionally, porous ceramic honeycomb structures have been employed as catalysts or carriers for catalyst for removing, for example, nitrogen oxides, carbon monoxide and hydrocarbon present in the exhaust gas of internal combustion engines, such as automobiles, or filters for removing fine particles.

Whereas porous ceramic honeycomb structures continue to be a popular and useful material in such environments, there has been a desire to develop materials exhibiting greater mechanical strength and thermal resistance in hostile environments.

Apart from the above honeycomb structures, as restriction of exhaust emission has been intensified, there has been a demand for development of heaters for use in automobile exhaust emission control.

Honeycomb structures have been proposed in, for example, United States Patent No. 4,758,272, Japanese Utility Model Laid-Open No.6760̸9/1988 and U.K. Patent 1492929.

The honeycomb structure disclosed in United States Patent No. 4,758,272 has a composition essentially consisting, as analyzed in weight percent, of 5 to 50̸% Aℓ, 30̸ to 90̸% Fe, 0̸ to 10̸% Sn, 0̸ to 10̸% Cu, 0̸ to 10̸% Cr and no more than 1% Mg and/or Ca. This honeycomb structure has a porosity of 25 to 75% and a predetermined cell density, and is used as a diesel particulate filter.

However, United States Patent No. 4,758,272 does not disclose the use of the above-described honeycomb structure as a heater or a catalytic converter.

U.K. Patent 1492929 discloses the use of foil type metal honeycomb structure in a catalyst for use in automobile exhaust emission control. This honeycomb structure comprises a metal substrate produced by winding, together with a flat plate, a mechanically deformed, corrugated flat plate. This metal substrate has an oxide aluminum film formed on the surface thereof by the oxidation process. The catalyst for use in automobile exhaust emission control is manufactured by placing a high surface area oxide, such as alumina, on the oxide aluminum film of the metal substrate and by supporting a noble metal on the high surface area oxide.

Japanese Utility Model Laid-Open No. 6760̸9/1988 discloses the use as a preheater of a electrically conductable metal monolith catalyst comprising a metal support and alumina coated thereon.

In the foil-type metal honeycomb structure disclosed in U.K. Patent 1492929, however, the metal substrate with a coating formed thereon cannot be closely adhered to a catalyst layer because of its low porosity, and a ceramic catalyst readily peels off the metal substrate due to a difference in the thermal expansion between the ceramic catalyst and the metal substrate. Furthermore, telescope phenomenon readily occurs during the run cycle in which a metal to metal Join breaks and the metal substrate is deformed in such a manner that it protrudes in the direction of the flow of gas. This may disturb safe running of the vehicle. Furthermore, in the manufacture of the foil type metal honeycomb, yield of the rolling process is low, inviting high production cost. In the preheater proposed in Japanese Utility Model Laid-Open No. 6760̸9/1988, coated alumina readily peels off metal support due to a difference in thermal expansion between alumina and the metal support. Furthermore, a metal to metal join of the metal substrate breaks during the operation, generating an electrically insulating portion and, hence, non-uniform flow of current and non-uniform heating.

The preheater disclosed in Japanese Utility Model Laid-Open No. 6760̸9/1988 is constructed such that a current is supplied between the inner periphery and the outer periphery of the foil type metal honeycomb structure to generate heat. However, we have noted that it is impossible to get an adjusted resistance (that is, the material, dimension and rib thickness of the honeycomb structure define the resistance but a desired resistance cannot be adjusted), and therefore exhibits insufficient temperature rising characteristics. Furthermore, since the electrodes are provided on the inner peripheral portion of the preheater, the central portion thereof does not act as a catalyst and pressure loss may be generated. Furthermore, the electrodes readily break due to the flow of gas.

WO 89/10471 describes electrically conductive honeycomb bodies, used as heatable catalyst supports, made of metal sheets. The cell structure is composed of corrugated sheets lying between relatively flat sheets. Current flow is directed by insulating layers interposed between layers or spiral turns of this honeycomb structure.

GB-A-2049377 describes ceramic honeycomb bodies made into electrical resistors for heating fluid, by applying electrically conductive coatings to the passage walls of the electrically resistive honeycomb structure. Current flow to heat the structure is thus generally perpendicular to the walls.

It would be desirable to eliminate or at least reduce one or more of the above problems, in a heater and/or converter, and in particular provide the novel measure of resistance adjustment.

In one aspect, the present invention provides a resistance heating element as set out in claim 1.

In another aspect we provide a method of making a resistance heater comprising a honeycomb structure, as set out in claim 12.

In yet another aspect, the invention provides a resistance heater having a honeycomb structure as set out in claim 15.

The present invention further provides a catalytic converter which comprises a main monolith catalyst and the above-described heating element placed upstream of the main monolith catalyst.

In the preferred form, the honeycomb structure is the one manufactured by extruding powders into a honeycomb configuration and by sintering the shaped body.

Embodiments of the invention are described below with reference to the drawings.
Fig. 1 to Fig. 5 are perspective views showing examples of heaters or catalytic converters embodying the present invention:
Fig. 6 is a view showing another example of the present invention, Fig. 6 (a) is a perspective view, Fig. 6 (b) is a side view and Fig. 6 (c) is a plan view;
Fig. 7 is a view showing further example of the present invention, Fig. 7 (a) is a perspective view and Fig. 7 (b) is a side view; and
Fig. 9 is a partly enlarged view of passages of another type honeycomb structure usable in the invention.
Fig. 10̸ is an illustration of a square cell structure between adjacent slits in a heater embodying the invention.
Fig. 11 is a perspective view of a heater catalyst A.
Fig. 12 is a perspective view of a heater catalyst B.
Fig. 13 is an illustration of an apparatus used for evaluation of performance of the heater catalyst.

The present invention discloses a resistance adjusting type heater which comprises a honeycomb structure having a large number of passages, at least two electrodes for energizing the honeycomb structure, and a resistance adjusting means provided between the electrodes. That is, heat generation characteristics of the heater can be controlled by adjusting a resistance thereof, so the heater can be heated locally or in its entirety depending on its application.

In the catalytic converter of the present invention, heat generation characteristics thereof can be controlled as in the case of the above heater. So, the catalytic converter can be heated locally or in its entirety depending on its application.

The honeycomb structure employed in the present invention may be produced by extruding powders into a honeycomb configuration and by sintering the formed body. That is, the honeycomb structure may be the one manufactured using the powder metallurgy and extrusion. Therefore, the manufacture process is simple and low production cost can be attained.

The use of a honeycomb structure (a unitary body) manufactured by using powders in the heater and catalytic converter contemplated in the present invention eliminates telescope phenomenon, and achieves uniform heating.

In the present invention, it is preferable to form a slit or slits as the resistance adjusting means at a predetermined angle to the cell walls of the honeycomb structure rather than in the same direction as the cell walls. According to this arrangement, all the ribs (cell walls) between the electrodes are supplied with electric current so that the heat generating area and, hence, the heat exchanging area, is increased.

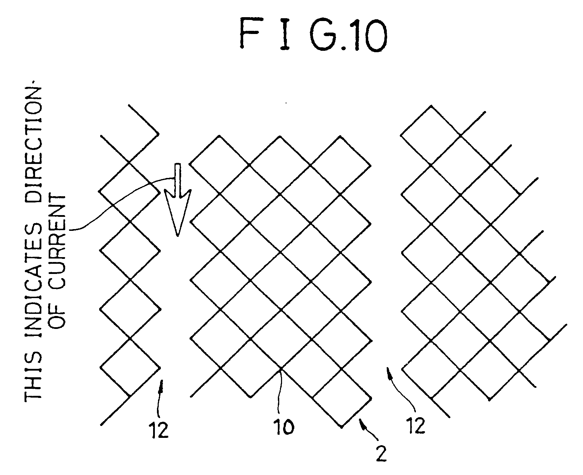

By forming the slits 12 so as to make a predetermined angle to the cell walls 10̸ of the honeycomb structure, the square cell structure 2 is arranged such that all the cell walls 10̸ form a predetermined angle to the direction of flow of the electric current, as shown in Fig. 10̸.

In the resistance adjusting type heater contemplated in the present invention, coating of a heat-resistant metal oxide, such as Aℓ₂O₃ or Cr₂O₃, on the surface of the cell walls and that of the pores of a metal honeycomb structure is preferred to enhance resistance to heat, oxidation and corrosion.

Whereas any material, ceramic or metal, capable of generating heat when energized can be used as the material of the honeycomb structure which is the basic body of the invention, the use of metals enhances the mechanical strength. Examples of such metals include stainless steel and those having compositions of Fe-Cr-Aℓ, Fe-Cr, Fe-Aℓ, Fe-Ni, W-Co, and Ni-Cr. Among the above materials, Fe-Cr-Aℓ, Fe-Cr and Fe-Aℓ are preferred because of low cost and high resistance to heat, oxidation and corrosion. Foil type metal honeycomb structures may also be employed.

The honeycomb structure employed in the present invention may be porous or may not be porous. In the case where a catalyst is carried on the honeycomb structure, however, a porous honeycomb structure is preferred because it is closely adhered to a catalyst layer and does not cause peeling off the catalyst due to a difference in the thermal expansion between the honeycomb structure and the catalyst. Even if a non-porous honeycomb structure is employed, since the heater of this invention has a resistance adjusting means which may be a slit, a thermal stress may be reduced while the possibility of-crack occurrence may be decreased.

The method of manufacturing the metal honeycomb structure which can be employed in the present invention will now be exemplified.

First, Fe powder, Aℓ powder and Cr powder, or alternatively powders of alloys of these metals, are mixed to prepare a metal powder mixture having a desired composition. Subsequently, the metal powder mixture is blended into an organic binder, such as methyl cellulose or polyvinylalcohol, and water to produce a readily formable mixture, and that mixture is then formed into a shape of a desired honeycomb configuration by the extrusion.

When the metal powder mixture is blended into an organic binder and water, prior to the addition of water, an antioxidant, such as oleic acid, may be added to the metal powder mixture. Alternatively, powders of metals which are subjected to anti-oxidation process may be employed.

Next, the formed honeycomb body is fired in a non-oxidizing atmosphere at a temperature ranging between 10̸0̸0̸ and 1450̸°C. During the sintering in the non-oxidizing atmosphere containing hydrogen, the organic binder is decomposed and thereby removed with the aid of Fe or the like which acts as a catalyst, and a good sintered body can therefore be obtained.

Sintering at a temperature lower than 10̸0̸0̸°C achieves no sintering. Sintering conducted at a temperature higher than 1450̸°C causes deformation of the resulting sintered body.

Preferably, a heat-resistant metal oxide is then coated on the surface of the cell walls and that of the pores of the obtained sintered body by any of the following methods wherein:
(1) the metal honeycomb structure (the sintered body) is subjected to the heat-treatment in an oxidizing atmosphere at a temperature ranging between 70̸0̸ to 110̸0̸°C.
(2) Aℓ or the like is plated (e.g., vapor plating) on the surface of the cell walls and that of the pores of the sintered body and that sintered body is then subjected to heat-treatment in an oxidizing atmosphere at a temperature between 70̸0̸ and 110̸0̸° C.
(3) the sintered body is dipped into a molten metal, such as Aℓ, and that sintered body is then subjected to the heat-treatment in an oxidizing atmosphere at a temperature between 70̸0̸ and 110̸0̸°C.
(4) alumina sol or the like is coated on the surface of the cell walls and that of the pores of the sintered body and that sintered body is then subjected to the heat-treatment in an oxidizing atmosphere at a temperature between 70̸0̸ and 110̸0̸° C.

To enhance resistance to heat and oxidation, heat-treatment conducted at a temperature ranging between 90̸0̸ and 110̸0̸°C is preferred.

Next, a resistance adjusting means of any form is provided on the obtained honeycomb structure between the electrodes thereof, which will be described later.

The resistance adjusting means provided on the honeycomb structure may take on any of the following forms:
(1) a slit or slits of any length, formed in any direction at any position
(2) variations in the length of cell walls in the axial direction of the passages, and
(3) a slit or slits formed in the cell wall (rib) of the honeycomb structure.

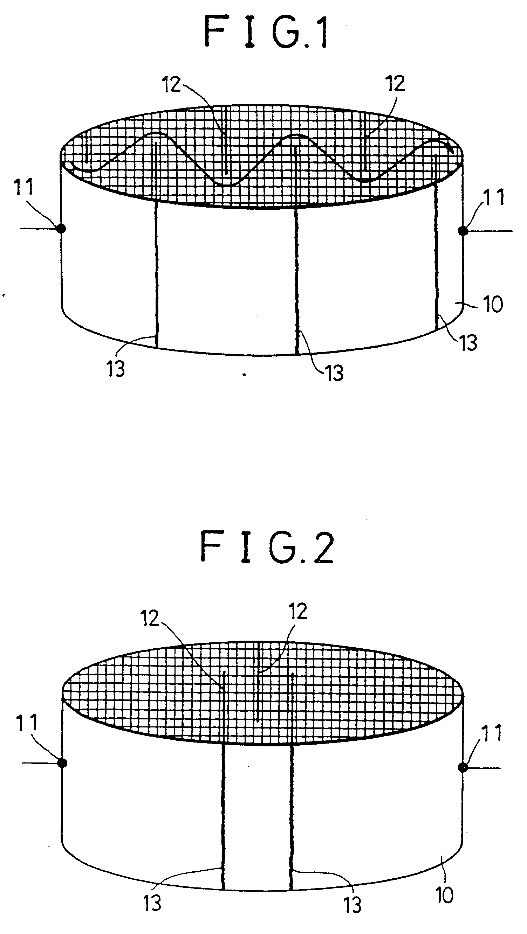

Examples of the resistance adjusting means are typically shown in Figs. 1 to 7 and 9. In the drawings, each arrow indicates a current flow.

A resistance adjusting type heater requires the provision of electrodes at the outer periphery or inside of the metal honeycomb structure obtained in the manner described above, e.g. by brazing or welding.

As used herein, "electrode" means a general term of a terminal for energizing the heater and includes a terminal which is made by joining an outer periphery of the heater to a casing, or an earth, etc., unless the context requires otherwise.

In the thus-obtained metal honeycomb structure designed for use as a heater, the resistance thereof will be preferably held between 0̸.0̸0̸1 Ω and 0̸.5 Ω.

Also, a heater or catalytic converter can be produced by placing a catalyst on the surface of the obtained metal honeycomb structure. In such heater or catalytic converter, heat is generated due to reaction (oxidation) of the exhaust gas.

The catalyst supported on the surface of the metal honeycomb structure may be of a carrier having a high surface area and a catalytic activating material supported on the carrier. Typical examples of the carriers having a high surface area include γ-Aℓ₂O₃, TiO₂, SiO₂ -Aℓ₂O₃ and perovskite. Examples of the catalytic activating material include noble metals, such as Pt, Pd and Rh, and base metals, such as Cu, Ni, Cr and Co. The preferred catalyst is the one in which from 10̸ to 10̸0̸ g/ft³ noble metal is loaded on the carrier made of γ-Aℓ₂O₃.

Whereas the honeycomb structure employed in the present invention may have any configuration, it is desirable that the cell density ranges from 6 to 150̸0̸ cells-in² (0̸.9 to 233 cells/cm² ) with a wall thickness ranging from 50̸ to 20̸0̸0̸ µm.

As stated above, the honeycomb structure employed in the present invention may be porous or may not be porous and may have any porosity. However, to achieve sufficient mechanical strength and resistance to oxidation and corrosion, the porosity of the metal honeycomb structure will preferably be held between 0̸ and 50̸% by volume with most preferable porosity being less than 25% by volume. In a honeycomb structure designed to carry a catalyst thereon, the porosity will be held 5% or above to ensure strong adhesion between the honeycomb structure and catalyst layers.

The term, "honeycomb structure" is employed in this application to refer to an integral body having a large number of passages partitioned by the walls. The passages may have any cross-sectional form (cell shape), e.g., a circular, polygonal or corrugated form.

The present invention will further be illustrated in the following examples which are intended to be illustrative, but not limiting, of this invention.

### Example 1

Fe powder, Fe-Aℓ powder (Aℓ : 50̸ wt%) and Fe-Cr powder (Cr : 50̸ wt%), having average particle sizes of 10̸, 20̸ and 22 µm, were mixed to prepare a mixture having a composition of Fe-22Cr-5Aℓ (% by weight), and the obtained mixture was then blended into an organic binder (methyl cellulose), an antioxidant (oleic acid) and water to produce a readily formable body. That body was formed into a square cell honeycomb structure having a rib thickness of 4 mil and a cell density of 30̸0̸ cpi² by the extrusion. The extruded honeycomb structure was dried and fired in H₂ atmosphere at 130̸0̸°C. Thereafter, the obtained honeycomb structure was subjected to the heat-treatment in an atmosphere at 10̸0̸0̸°C. The obtained honeycomb structure had a porosity of 22% by volume and an average pore diameter of 5 µm.

Two electrodes 11 were provided on the outer wall of the thus-obtained honeycomb structure having an outer diameter of 90̸ mmø and a length of 15 mm, as shown in Fig. 1. Also, six slits 12 having a length of 70̸ mm were formed in the honeycomb structure in the axial direction of the passages (the slits provided at the two ends had a length of 50̸ mm) at intervals of seven cells (about 10̸ mm). Zirconia type heat-resistant inorganic adhesive was filled in an outer peripheral portion 13 of each slit 12 to form an insulating portion. The slits were parallel, from alternative sides.

### Example 2

γ-Aℓ₂O₃ was coated on the honeycomb structure obtained in Example 1, and each 20̸ g/ft³ Pt and Pd were then loaded on this γ-Aℓ₂O₃. Thereafter, the whole honeycomb structure was fired at 60̸0̸°C to obtain a honeycomb structure with a catalyst carried thereon. Thereafter, the electrodes 11 were provided on this honeycomb structure with a catalyst in the same manner as that of Example 1.

### Example 3

Three slits 12 were formed in the central portion of the honeycomb structure obtained in the same manner as that of Example 1, as shown in Fig. 2. The slits 12 were separated by intervals of three cells which were about 4.5 mm. The electrodes 11 were provided in the same manner as that of Example 1. Again, the slits were parallel to the structure axis.

### Example 4

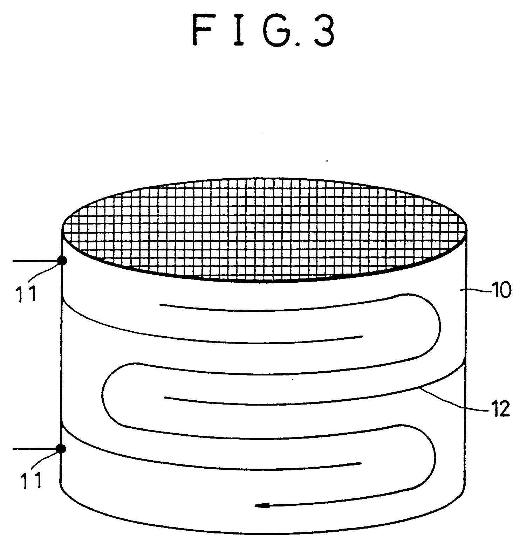

Three slits 12 were formed in the honeycomb structure obtained in the same manner as that of Example 1 in a direction perpendicular to the axial direction of the passages (in the radial direction), as shown in Fig. 3. The slits 12 were separated from each other by 5 mm, and had a length of 70̸ mm. The electrodes 11 were provided on the upper and lower end portions of the outer wall 10̸ of the honeycomb structure, as shown in Fig. 3.

### Example 5

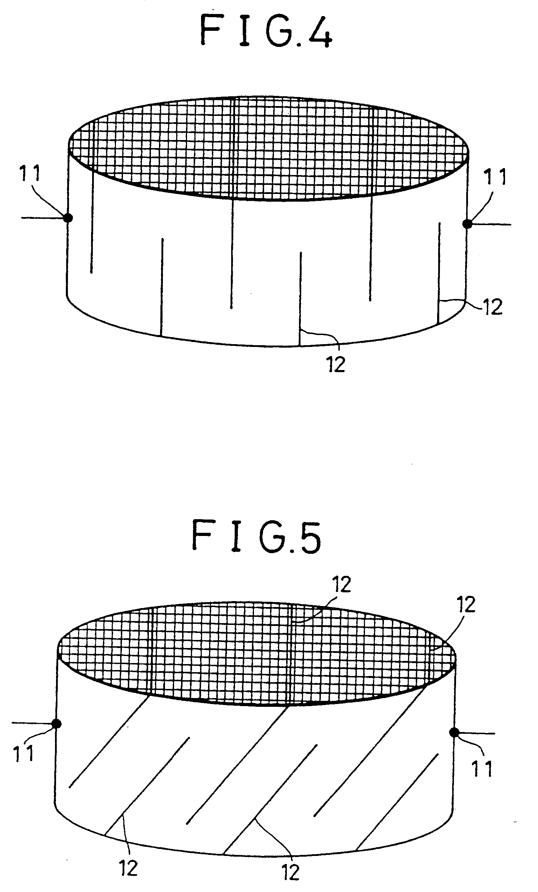

Six slits 12 (three slits in the upper portion and three slits in the lower portion) were formed in the honeycomb structure obtained in the same manner as that of Example 1 in the axial direction of the passages at intervals of seven cells (about 10̸ mm), as shown in Fig. 4 The slit depth was 10̸ mm. The electrodes 11 were provided on the honeycomb structure in the same manner as that of Example 1.

### Example 6

Six slits 12 (three slits in the upper portion and three slits in the lower portion) were formed in the honeycomb structure obtained in the same manner as that of Example 1 in such a manner that they were inclined at a predetermined angle with respect to the axis of the passage, as shown in Fig. 5. The slits 12 were separated from each other by seven cells (about 10̸ mm). The slit depth was 12 mm.

### Example 7

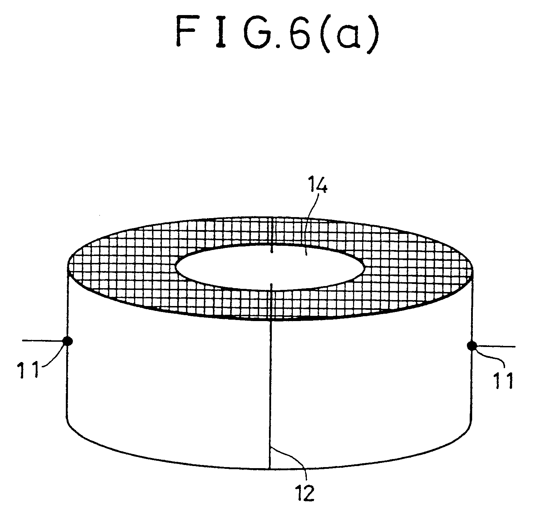

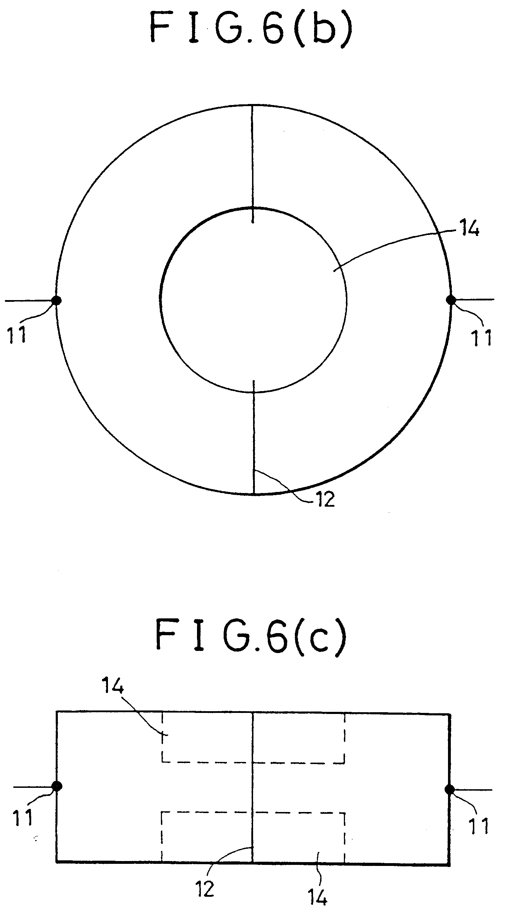

A recess 14, having a depth of 4 mm, was formed in the honeycomb structure obtained in the same manner as that of Example 1 at the central portion of 50̸ mmø at each end portion thereof, as shown in Figs. 6 (a) and (b), and two slits 12 were then formed, as shown in Fig. 6 (c). Thereafter, the electrodes 11 were provided on the honeycomb structure in the same manner as that of Example 1.

### Example 8

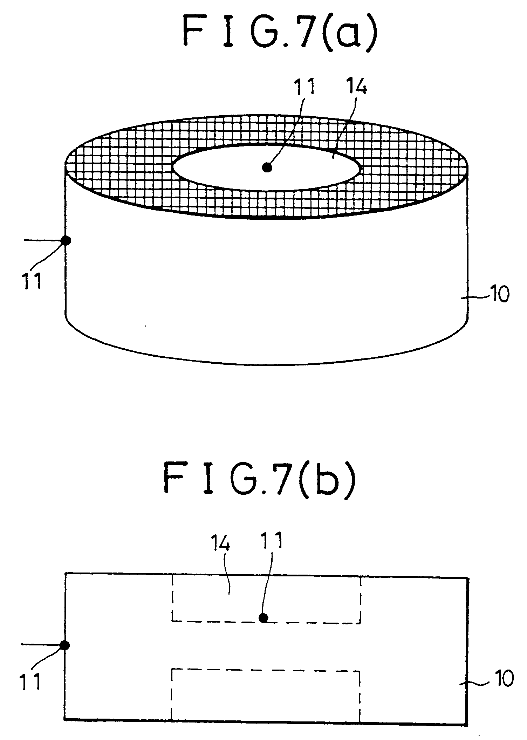

A recess 14, having a depth of 4 mm, was formed in the honeycomb structure obtained in the same manner as that of Example 1 at the central portion of 50̸ mmø at each end portion thereof, as shown in Figs. 7 (a) and (b), and the two electrodes 11 were provided at the central portion of one of the recesses 14 and the outer wall 10̸ of the honeycomb structure, respectively.

### Example 10̸

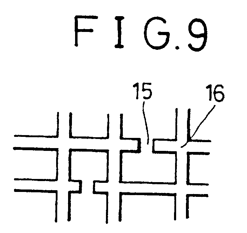

Slits 15 were adequately formed in ribs 16 of the central portion of the honeycomb structure obtained in Example 9 to control heat generation characteristics thereof, as shown in Fig. 9. Such a honeycomb structure can also be easily manufactured using an extrusion die.

### Comparative Example 1

Electrodes were provided, in the same manner as that of example 1, on the honeycomb structure, having an outer diameter of 90̸ mmø and a length of 15 mm, obtained in Example 1. This honeycomb structure had no slits.

### [Evaluation]

### (Checking of performance of a preheater for use in automobile exhaust emission control)

In order to check the performance of a catalytic converter employing a three-way catalyst which was on sale when an engine was started, the conversion of the gas components of an exhaust was measured by introducing the exhaust into that catalytic converter in such a manner that the temperature of the inlet of the catalyst rose from 10̸0̸oC to 420̸°C in two minutes (at a fixed speed) and then that temperature was then maintained at 420̸°C for 1 minute (data without heater).

Thereafter, each of the samples of the Examples of the present invention was provided in front of the three-way catalyst as a preheater, and the conversion provided by that catalytic converter was measured in the same manner by introducing the exhaust thereinto while energizing the preheater.

The preheater was used in a state in which it was energized for 1 minute by a battery of 12V. Table 1 shows the average conversion of the conversions obtained in three minutes for each of the gas components.

**Table 1**

| Average Conversion (%) | | | |
|---|---|---|---|
| Sample | CO | HC | NOx |
| Without heater | 50̸ | 37 | 47 |
| Example 1 | 64 | 50̸ | 65 |
| Example 2 | 70̸ | 55 | 68 |
| Example 3 | 63 | 50̸ | 63 |
| Example 4 | 63 | 51 | 64 |
| Example 5 | 64 | 50̸ | 65 |
| Example 6 | 63 | 48 | 61 |
| Example 7 | 64 | 51 | 66 |
| Example 8 | 63 | 50̸ | 64 |
| Comparative Example 1 | 58 | 44 | 55 |

### Example 11

### Production of Sample A:

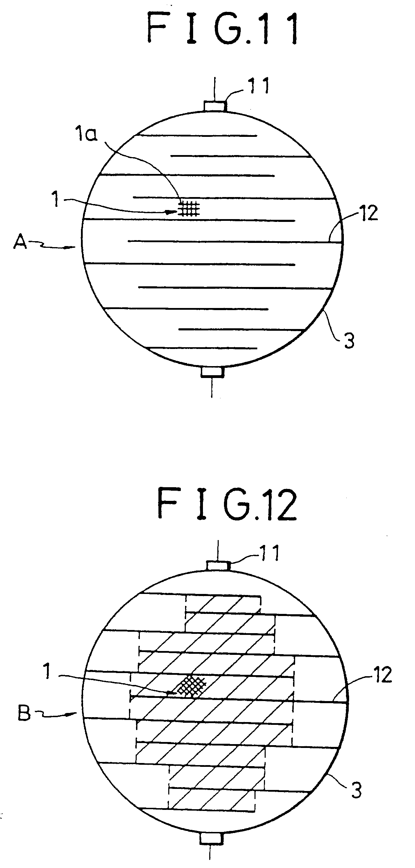

Fe powder, Fe-Cr powder and Fe-Al powder were mixed to form a composition expressed by Fe-20̸Cr-5Al(wt %). An organic binder (methyl cellulose), an anti-oxidation agent (Oleic acid) and water were added to this composition so as to form slurry. The slurry was extruded and dried so that a dried honeycomb body shown in Fig. 11 was obtained. The outside diameter and the thickness of the thus formed honeycomb body were 110̸ mm and 30̸ mm, respectively. The honeycomb structure had a multiplicity of square cells arranged at a density of 30̸0̸ cells per square inch. Eleven slits 12 were formed in the honeycomb body such that six cells are included in the region between adjacent slits and such that the slits extend in the same direction as half 1a of the ribs (cell walls 1) defining the cells.

Subsequently, the honeycomb body was fired in an H₂ gas atmosphere, whereby a honeycomb structure 3 was obtained to have an outside diameter of 92 mm and a thickness of 25 mm.

The honeycomb structure 3 was coated with γ-Al₂O₃ and precious metals Pt and Rh were loaded in amounts of 30̸ g/ft³ and 6g/ft³, respectively. The honeycomb structure was then fired at 60̸0̸°C, whereby a honeycomb structure carrying catalyst was obtained. Then, a pair of electrodes 11 were set in the outer wall of the thus-obtained honeycomb structure, whereby a heater catalyst A was obtained.

### Production of Sample B:

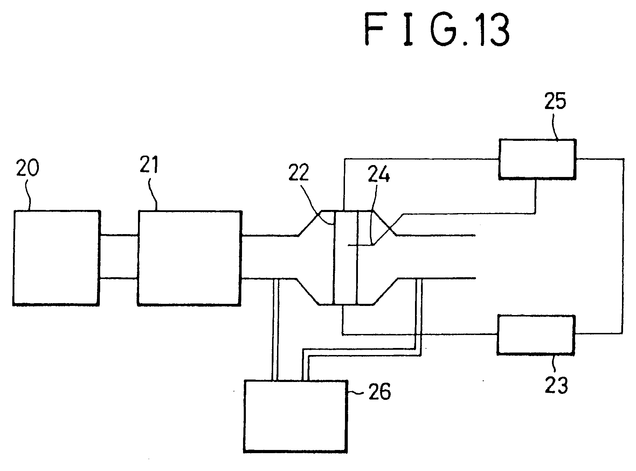

A honeycomb body of the same shape as that in Sample A was prepared from the same materials and through the same extrusion and drying process as in Sample A. Then, a honeycomb structure having the same number of slits 12 as Sample A was obtained. The length and pitch of the slits also were the same as those in Sample A. In this case, however, the slits were directed to form 45° to the cell walls 10̸ of the cell, as shown in Fig. 12.

The same process as that for the production of Sample A was applied to the above-mentioned honey-comb structure 3, whereby a heater catalyst B was obtained to have the same shape and heat generating area as Sample A. Thus, catalyst heater B was the same as the catalyst heater A except the angle of the slits to the cell walls of the cell.

Before evaluating these heater catalysts A and B, electrical resistance of the heater catalysts A and B were measured. Both the heater catalysts A and B showed the same level of resistance of 0̸.0̸4 Ω. The effective volumes of the catalyst of both samples were 133 cm³ and, hence, were equal.

The evaluation of performance of the heater catalysts were conducted by using an apparatus shown in Fig. 13.

More specifically, the exhaust gas from gasoline engine 20̸ is cooled down to 120̸°C through a cooler 21 and then introduced into the heater catalyst 22. Electric power was supplied to the heater catalyst 22 simultaneously with the commencement of evaluation from a 24V battery and the power supply was continued for 60̸ seconds with an on-off control by controller 25 such that the temperature of the heater catalyst as measured by a thermo-couple is maintained at 350̸°C. The mean cleaning rations for HC, CO and NOx during the period of 60̸ seconds were measured by an exhaust gas measuring device 26. The values of the mean cleaning ratios as measured on heater catalysts A and B are shown in table 2.

**Table 2**

| Mean Cleaning Ratio (%) | | | |
|---|---|---|---|
| | HC | CO | NOx |
| heater catalystA | 34 | 52 | 58 |
| heater catalystB | 40̸ | 62 | 66 |

## Claims

1. A resistance heating element comprising an electrically conductive honeycomb structure (10) having partition walls defining a large number of parallel passages for fluid flow extending in an axial direction and at least two-electrodes (11) on said honeycomb structure for passing electric current through the structure, wherein current flow for electrical resistance heating of said honeycomb structure (10) in use of the heater passes through the partition walls in general directions parallel to the faces of the partition walls,
characterised in that said partition walls defining said parallel passages are planar and in that there is at least one slit (12) in said honeycomb structure which is open for axial fluid flow, said slit (12) extending through at least part of the axial length of the structure (10) parallel to said axial direction thereof and crossing the planes of a plurality of said planar partition walls.

2. A resistance heating element according to claim 1 wherein there are a plurality of said slits (12) parallel to each other.

3. A resistance heating element according to claim 2 having said two electrodes (11) on opposite sides of the honeycomb structure (10), there being a plurality of said slits (12) parallel to each other and extending inwardly of said honeycomb structure from opposite side or end regions thereof so that the or each said slit from a first said region overlaps at least one said slit from the opposite said region, thereby creating a sinuous general path for current flow between said electrodes (11).

4. A resistance heating element according to any one of claims 1 to 3 wherein said honeycomb structure (10) is made by extrusion in said axial direction.

5. A resistance heating element according to any one of claims 1 to 4 wherein said honeycomb structure (10) is a sintered honeycomb monolith.

6. A resistance heating element according to any one of claims 1 to 5 wherein the or each said slit (12) extends the whole axial length of the honeycomb structure (10).

7. A resistance heating element according to any one of claims 1 to 6 wherein the or each said slit (12) is planar.

8. A resistance heating element according to any one of claims 1 to 7 wherein the or each said slit (12) has a width in a transverse direction perpendicular to said axial direction which is not more than the unit width of said parallel passages in said transverse direction.

9. A catalytic converter comprising a main monolith catalyst and a resistance heating element according to any one of claims 1 to 8 arranged upstream of said main monolith catalyst in the flow direction of gas through the converter.

10. A catalytic converter comprising a resistance heating element according to any one of claims 1 to 8 and a catalyst carried on said honeycomb structure.

11. A catalytic converter comprising a main monolith catalyst and a resistance heating element according to any one of claims 1 to 8, said resistance heating element having a catalyst carried on the honeycomb structure thereof.

12. A method of making a resistance heater having a honeycomb structure (10) which is electrically conductive and has a large number of parallel passages for axial fluid flow defined by partition walls having a general regular pattern throughout the structure (10), said heater having spaced electrodes (11) for passing electric current through said honeycomb structure, and wherein current flow for electrical resistance heating of said honeycomb structure (10) in use of the heater passes through the partition walls in general directions parallel to the faces of the partition walls, said method being characterised in that the honeycomb structure (10) is a monolith and in that the method includes the step of adjusting the electrical resistance characteristic of the structure. (10) by providing it with a local incorporated structural non-uniformity or non-uniformities (12,14,15) of said regular pattern in a predetermined manner, said structural non-uniformity or non-uniformities comprising:
(i) a slit or slits (12) cut into the honeycomb structure and extending in a direction for a distance corresponding to a multiple of the dimension of said passages in said direction;
(ii) a slit or slits (15) interrupting substantially isolated partition walls in the structure; or
(iii) variations (14) in the partition wall axial length over the honeycomb structure.

13. A method according to claim 12 in which the honeycomb structure is formed by extrusion of a powder composition.

14. A method according to claim 13 wherein said powder composition is a metal powder.

15. A resistance heater having a honeycomb structure (10) which is electrically conductive and has a large number of parallel passages for axial fluid flow defined by partition walls having a general regular pattern throughout the structure (10), said heater having spaced electrodes (11) for passing electric current through said honeycomb structure, and wherein current flow for electrical resistance heating of said honeycomb structure (10) in use of the heater passes through the partition walls in general directions parallel to the faces of the partition walls, characterised in that the honeycomb structure (10) is a monolith and has a local structural non-uniformity or non-uniformities (12,14,15) of said regular pattern incorporated in the structure in a predetermined manner, so as to determine the electrical resistance characteristic of the honeycomb structure, said structural non-uniformity or non-uniformities comprising:
(i) a slit or slits (12) cut into the honeycomb structure and extending for a distance in a direction corresponding to a multiple of the dimension of said passages in said direction:
(ii) a slit or slits (15) interrupting substantially isolated partition walls in the structure; or
(iii) variations (14) in the partition wall axial length over the honeycomb structure.

16. A resistance heater according to claim 15 in which the honeycomb structure has been formed by extrusion of a powder composition.

## Patentansprüche

1. Widerstandsheizelement, umfassend eine elektrisch leitende Bienenwabenstruktur (10) mit Trennwänden, die eine große Anzahl paralleler Durchgänge zum Fluidfluß definieren, die sich in einer axialen Richtung erstrecken, sowie zumindest zwei Elektroden (11) auf der genannten Bienenwabenstruktur zum Hindurchleiten von elektrischem Strom durch die Anordnung, worin Stromfluß zur elektrischen Widerstandserwärmung der genannten Bienenwabenstruktur (10) bei der Verwendung des Heizgerätes durch die Trennwände in im allgemeinen parallelen Richtungen zu den Flächen der Trennwände hindurchgeht,
dadurch gekennzeichnet, daß die genannten Trennwände, die die genannten parallelen Durchgänge definieren, eben sind und daß zumindest ein Schlitz (12) in der genannten Bienenwabenstruktur vorhanden ist, der für axialen Fluidfluß offen ist, wobei sich der genannte Schlitz (12) durch zumindest einen Teil der axialen Länge der Struktur (10) parallel zu deren genannter axialer Richtung erstreckt und die Ebenen einer Vielzahl der genannten ebenen Trennwände kreuzt.

2. Widerstandsheizelement nach Anspruch 1, worin eine Vielzahl der genannten Schlitze (12) parallel zueinander angeordnet ist.

3. Widerstandsheizelement nach Anspruch 2 mit den genannten beiden Elektroden (11) an gegenüberliegenden Seiten der Bienenwabenstruktur (10), wobei eine Vielzahl der genannten Schlitze (12) parallel zueinander angeordnet ist und sich an der genannten Bienenwabenstruktur von gegenüberliegenden Seiten- oder Endbereichen davon nach innen erstreckt, sodaß der oder jeder genannte Schlitz von einem ersten genannten Bereich zumindest einen genannten Schlitz vom gegenüberliegenden genannten Bereich überlappt, wodurch ein gewundener allgemeiner Weg für Stromfluß zwischen den genannten Elektroden (11) gebildet ist.

4. Widerstandsheizelement nach einem der Ansprüche 1 bis 3, worin die genannte Bienenwabenstruktur (10) durch Extrudieren in der genannten axialen Richtung hergestellt wird.

5. Widerstandsheizelement nach einem der Ansprüche 1 bis 4, worin die genannte Bienenwabenstruktur (10) ein gesinterter Bienenwabenmonolith ist.

6. Widerstandsheizelement nach einem der Ansprüche 1 bis 5, worin der oder jeder genannte Schlitz (12) sich über die gesamte axiale Länge der Bienenwabenstruktur (10) erstreckt.

7. Widerstandsheizelement nach einem der Ansprüche 1 bis 6, worin der oder jeder genannte Schlitz (12) eben ist.

8. Widerstandsheizelement nach einem der Ansprüche 1 bis 7, worin der oder jeder genannte Schlitz (12) eine Breite in einer Querrichtung senkrecht zur genannten axialen Richtung aufweist, die nicht größer ist als die Einheitsbreite der genannten parallelen Durchgänge in der genannten Querrichtung.

9. Katalytischer Umwandler, umfassend einen monolithischen Hauptkatalysator und ein Widerstandsheizelement nach einem der Ansprüche 1 bis 8, das stromaufwärts vom genannten monolithischen Hauptkatalysator in der Strömungsrichtung von Gas durch den Umwandler angeordnet ist.

10. Katalytischer Umwandler, umfassend ein Widerstandsheizelement nach einem der Ansprüche 1 bis 8 und einen auf der genannten Bienenwabenstruktur getragenen Katalysator.

11. Katalytischer Umwandler, umfassend einen monolithischen Hauptkatalysator und ein Widerstandsheizelement nach einem der Ansprüche 1 bis 8, wobei das genannte Widerstandsheizelement einen auf seiner Bienenwabenstruktur getragenen Katalysator umfaßt.

12. Verfahren zur Herstellung eines Widerstandsheizgerätes mit einer Bienenwabenstruktur (10), die elektrisch leitend ist und eine große Anzahl paralleler Durchgänge für axialen Fluidfluß aufweist, die durch Trennwände mit einem im allgemeinen regelmäßigen Muster über die gesamte Anordnung (10) definiert sind, wobei das genannte Heizgerät beabstandete Elektroden (11) zum Hindurchleiten von elektrischem Strom durch die genannte Bienenwabenstruktur aufweist und worin Stromfluß zur elektrischen Widerstandserwärmung der genannten Bienenwabenstruktur (10) bei der Verwendung des Heizgerätes durch die Trennwände in im allgemeinen parallele Richtungen zu den Flächen der Trennwände hindurchgeht, wobei das genannte Verfahren dadurch gekennzeichnet ist, daß die Bienenwabenstruktur (10) ein Monolith ist und daß das Verfahren den Schritt des Einstellens der elektrischen Widerstandscharakteristik der Struktur (10) umfaßt, indem sie auf vorbestimmte Art mit einer lokal eingearbeiteten strukturellen Ungleichmäßigkeit oder Ungleichmäßigkeiten (12,14,15) des genannten regelmäßigen Musters versehen wird, wobei die genannte(n) strukturelle Ungleichmäßigkeit oder Ungleichmäßigkeiten umfaßt/umfassen:
(i) einen in die Bienenwabenstruktur geschnittenen Schlitz oder Schlitze (12), der/die sich über eine Distanz in eine Richtung erstreckt/erstrecken, die einem Vielfachen der Abmessung der genannten Durchgänge in die genannte Richtung entspricht;
(ii) einen Schlitz oder Schlitze (15), der/die im wesentlichen isolierte Trennwände in der Struktur unterbricht/unterbrechen;
(iii) Variationen (14) in der Trennwandaxiallänge über die Bienenwabenstruktur.

13. Verfahren nach Anspruch 12, worin die Bienenwabenstruktur durch Extrudieren einer Pulverzusammensetzung gebildet wird.

14. Verfahren nach Anspruch 13, worin die genannte Pulverzusammensetzung ein Metallpulver ist.

15. Widerstandsheizgerät mit einer Bienenwabenstruktur (10), die elektrisch leitend ist und eine große Anzahl paralleler Durchgänge für axialen Fluidfluß aufweist, die durch Trennwände mit einem im allgemeinen regelmäßigen Muster über die gesamte Struktur (10) definiert sind, wobei die genannte Heizeinrichtung beabstandete Elektroden (11) zum Hindurchleiten von elektrischem Strom durch die genannte Bienenwabenstruktur aufweist, und worin Stromfluß zur elektrischen Widerstandserwärmung der genannten Bienenwabenstruktur (10) bei der Verwendung des Heizgerätes durch die Trennwände in im allgemeinen parallele Richtungen zu den Flächen der Trennwände hindurchgeht, dadurch gekennzeichnet, daß die Bienenwabenstruktur (10) ein Monolith ist und eine lokale strukturelle Ungleichmäßigkeit oder Ungleichmäßigkeiten (12,14,15) des genannten regelmäßigen Musters auf vorbestimmte Art in die Struktur eingearbeitet aufweist, um so die elektrische Widerstandscharakteristik der Bienenwabenstruktur zu bestimmen, wobei die genannte(n) strukturelle(n) Ungleichmäßigkeit oder Ungleichmäßigkeiten umfaßt/umfassen:
(i) einen in die Bienenwabenstruktur geschnittenen Schlitz oder Schlitze, der/die sich über eine Distanz in eine Richtung erstreckt/erstrecken, die einem Vielfachen der Abmessung der genannten Durchgänge in die genannte Richtung entspricht;
(ii) einen Schlitz oder Schlitze (15), der/die im wesentlichen isolierte Trennwände in der Struktur unterbricht/unterbrechen;
(iii) Variationen (14) in der Trennwandaxiallänge über die Bienenwabenstruktur.

16. Widerstandsheizgerät nach Anspruch 15, worin die Bienenwabenstruktur durch Extrudieren einer Pulverzusammensetzung gebildet worden ist.

## Revendications

1. Elément de chauffage à résistance comprenant une structure en nid d'abeille bon conducteur électrique (10) ayant des parois de partition définissant un grand nombre de passages parallèles pour le flux de fluide s'étendant dans une direction axiale et au moins deux électrodes (11) sur ladite structure en nid d'abeille pour le passage du courant électrique au travers de la structure, dans lequel le flux de courant pour le chauffage de la résistance électrique de ladite structure en nid d'abeille (10) en cours d'utilisation de l'appareil de chauffage passe au travers des parois de partition dans des directions en général parallèles aux faces des parois de partition,
caractérisé en ce que lesdites parois de partition, définissant lesdits passages parallèles, sont planes et en ce qu'il y a au moins une incision (12) dans ladite structure en nid d'abeille, qui est ouverte pour le flux de fluide axial, ladite incision (12) s'étendant sur au moins une partie de la longueur axiale de la structure (10) parallèlement à ladite direction axiale de celle-ci et en traversant les plans d'une pluralité desdites parois planes de partition.

2. Elément de chauffage à résistance selon la revendication 1, dans lequel il y a une pluralité desdites incisions (12) parallèles les unes aux autres.

3. Elément de chauffage à résistance selon la revendication 2, ayant lesdites deux électrodes (11) sur les côtés opposés de la structure en nid d'abeille (10), présentant une pluralité desdites incisions (12) parallèles les unes aux autres s'étendant à l'intérieur de ladite structure en nid d'abeille à partir des régions latérales ou externes opposées, si bien qu'ainsi la ou chaque dite incision partant d'une première région précitée chevauche au moins une incision précitée de ladite région opposée, créant ainsi un chemin général sinueux pour le flux de courant entre lesdites électrodes (11).

4. Elément de chauffage à résistance selon l'une quelconque des revendications 1 à 3, dans lequel ladite structure en nid d'abeille (10) est produite par extrusion dans ladite direction axiale.

5. Elément de chauffage à résistance selon l'une quelconque des revendications 1 à 4, dans lequel ladite structure en nid d'abeille (10) est une structure monolithique en nid d'abeille frittée.

6. Elément de chauffage à résistance selon l'une quelconque des revendications 1 à 5, dans lequel la ou chaque dite incision (12) prolonge la longueur axiale entière de la structure en nid d'abeille (10).

7. Elément de chauffage à résistance selon l'une quelconque des revendications 1 à 6, dans lequel la ou chaque dite incision (12) est plane.

8. Elément de chauffage à résistance selon l'une quelconque des revendications 1 à 7, dans lequel la ou chaque incision (12) précitée a une largeur dans une direction transversale perpendiculaire à ladite direction axiale qui n'est pas supérieure à la largeur unitaire desdits passages parallèles dans ladite direction transversale.

9. Convertisseur catalytique comprenant un catalyseur monolithique principal et un élément de chauffage à résistance selon l'une quelconque des revendications 1 à 8 agencé en amont dudit catalyseur monolithique principal dans la direction du flux de gaz au travers du convertisseur.

10. Convertisseur catalytique comprenant un élément de chauffage à résistance selon l'une quelconque des revendications 1 à 8 et un catalyseur supporté par ladite structure en nid d'abeille.

11. Convertisseur catalytique comprenant un catalyseur monolithique principal et un élément de chauffage à résistance selon l'une quelconque des revendications 1 à 8, ledit élément de chauffage à résistance ayant un catalyseur supporté par ladite structure en nid d'abeille de celui-ci.

12. Procédé de fabrication d'un appareil de chauffage à résistance ayant une structure en nid d'abeille (10) qui est bon conducteur électrique et a un grand nombre de passages parallèles pour le flux de fluide axial défini par des parois de partition ayant un motif régulier général dans toute la structure (10), ledit appareil de chauffage ayant des électrodes espacées (11) pour le passage du courant électrique au travers de ladite structure en nid d'abeille et dans lequel le flux de courant pour le chauffage de la résistance électrique de ladite structure en nid d'abeille (10) en cours d'utilisation de l'appareil de chauffage, passe au travers des parois de partition dans des directions en général parallèles aux faces des parois de partition, ledit procédé étant caractérisé en ce que la structure en nid d'abeille (10) est monolithique et en ce que le procédé inclut l'étape d'adaptation de la résistance électrique caractéristique de la structure (10) en y incorporant localement une non-uniformité ou des non-uniformités de structure (12, 14, 15) du motif régulier de manière prédéterminée, ladite non-uniformité ou lesdites non-uniformités de structure comprenant:
(i) une ou des incisions (12) pratiquées dans la structure en nid d'abeille et s'étendant dans une direction donnée sur une distance correspondant à un multiple de la dimension desdits passages dans ladite direction;
(ii) une ou des incisions (15) interrompant en substance des parois de partition isolées dans la structure; ou
(iii) des variations (14) dans la longueur axiale des parois de partition dans toute la structure en nid d'abeille.

13. Procédé selon la revendication 12, dans lequel la structure en nid d'abeille est formée par extrusion d'une composition de poudre.

14. Procédé selon la revendication 13, dans lequel ladite composition de poudre est une poudre de métal.

15. Appareil de chauffage à résistance ayant une structure en nid d'abeille (10) qui est bon conducteur électrique et a un grand nombre de passages parallèles pour un flux de fluide axial défini par des parois de partition ayant un motif régulier général dans toute la structure (10), ledit appareil de chauffage ayant des électrodes espacées (11) pour le passage du courant électrique au travers de ladite structure en nid d'abeille et dans lequel le flux de courant pour le chauffage de la résistance électrique de ladite structure en nid d'abeille (10) lors de l'utilisation de l'appareil de chauffage passe au travers des parois de partition dans des directions en général parallèles aux faces des parois de partition, caractérisé en ce que la structure en nid d'abeille (10) est monolithique et contient une non-uniformité ou des non-uniformités de structure locales (12, 14, 15) du motif régulier par incorporation dans la structure de manière prédéterminée, pour ainsi déterminer la résistance électrique caractéristique de la structure en nid d'abeille, ladite non-uniformité ou lesdites non-uniformités de structure comprenant:
(i) une ou des incisions (12) pratiquées dans la structure en nid d'abeille et s'étendant dans une direction sur une distance correspondant à un multiple de la dimension desdits passages dans ladite direction;
(ii) une ou des incisions (15) interrompant en substance des parois de partition isolées dans la structure; ou
(iii) des variations (14) dans la longueur axiale des parois de partition dans toute la structure en nid d'abeille.

16. Appareil de chauffage à résistance selon la revendication 15, dans lequel la structure en nid d'abeille a été formée par extrusion d'une composition de poudre.
